(19) Europäisches Patentamt
European Patent Office
Office européen des brevets

(11) EP 1 274 775 B1

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(21) Anmeldenummer: **01900406.8**

(22) Anmeldetag: **10.01.2001**

(51) Int Cl.:
***C08J 5/18*** *(2006.01)* ***B29D 7/01*** *(2006.01)*
***B32B 27/18*** *(2006.01)*

(86) Internationale Anmeldenummer:
**PCT/EP2001/000202**

(87) Internationale Veröffentlichungsnummer:
**WO 2001/053394 (26.07.2001 Gazette 2001/30)**

(54) **TRANSPARENTE FOLIE AUS KRISTALLISIERBAREN THERMOPLASTEN, VERFAHREN ZU IHRER HERSTELLUNG UND IHRE VERWENDUNG**

TRANSPARENT FILMS MADE OF CRISTALLIZABLE THERMOPLASTIC MATERIALS, PRODUCTION METHOD AND UTILIZATION THEREOF

FEUILLE TRANSPARENTE CONSTITUEE DE THERMOPLASTES CRISTALLISABLES, SON PROCEDE DE PRODUCTION ET SON UTILISATION

(84) Benannte Vertragsstaaten:
**DE FR GB IT LU**

(30) Priorität: **20.01.2000 DE 10002173**

(43) Veröffentlichungstag der Anmeldung:
**15.01.2003 Patentblatt 2003/03**

(73) Patentinhaber: **Mitsubishi Polyester Film GmbH**
**65203 Wiesbaden (DE)**

(72) Erfinder:
- **MURSCHALL, Ursula**
**55283 Nierstein (DE)**
- **KERN, Ulrich**
**55218 Ingelheim (DE)**
- **STOPP, Andreas**
**55218 Ingelheim (DE)**
- **CRASS, Günther**
**65232 Taunusstein (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 785 067** **GB-A- 2 344 596**
**JP-A- 04 325 551**

- **DATABASE WPI Section Ch, Week 198322 Derwent Publications Ltd., London, GB; Class A23, AN 1983-52522K XP002166128 & JP 58 067411 A (TEIJIN LTD), 22. April 1983 (1983-04-22)**

EP 1 274 775 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine transparente, schwerentflammbare, thermoformbare, UV-stabile, orientierte Folie aus kristallisierten Thermoplasten, deren Dicke im Bereich von bevorzugt 10 μm bis 350 μm liegt. Die Folie enthält mindestens ein Flammschutzmittel und einen UV-Absorber und zeichnet sich durch eine gute Verstreckbarkeit und Thermoformbarkeit, durch sehr gute optische und mechanische Eigenschaften und durch eine wirtschaftliche Herstellung aus. Die Erfindung betrifft ferner ein Verfahren zur Herstellung dieser Folie und ihre Verwendung.

Transparente, orientierte Folien aus kristallisierbaren Thermoplasten mit einer Dicke von 10 bis 350 μm sind hinreichend bekannt.

Diese Folien enthalten keinerlei UV-Absorber als Lichtschutzmittel und keinerlei Flammschutzmittel und sind nur unzureichend thermoformbar, so dass sich weder die Folien noch die daraus hergestellten Artikel bzw. Formkörper für Innen- und/oder Außenanwendungen, wo ein Brandschutz bzw. eine Schwerentflammbarkeit und Thermoformbarkeit gefordert ist, eignen. Die Folien erfüllen nicht die Brandtests nach DIN 4102 Teil 2 und Teil 1 sowie den UL-Test 94. Bei Außenanwendungen zeigen diese Folien bereits nach kurzer Zeit eine Vergilbung und eine Verschlechterung der mechanischen Eigenschaften infolge eines photooxidativen Abbaus durch Sonnenlicht.

In der EP-A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen. Der Schrift ist auch nicht zu entnehmen, ob sich diese Folien für Thermoformprozesse eignen.

In der DE-A 2346 787 ist ein schwerentflammbarer Rohstoff beschrieben, der phospholanmodifiziert ist. Neben dem Rohstoff ist auch die Verwendung des Rohstoffs zur Herstellung von Folien und Fasern beansprucht.

Beim Einsatz dieses phospholanmodifizierten Rohstoffs zur Folienherstellung zeigen sich folgende Defizite:

Der Rohstoff ist sehr hydrolyseempfindlich und muß sehr gut vorgetrocknet werden. Beim Trocknen des Rohstoffes mit Trocknern, die dem Stand der Technik entsprechen, verklebt der Rohstoff, so dass nur unter schwierigsten Bedingungen eine Folie herstellbar ist.

Die so unter unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

Die JP-A 04-325551 offenbart Folien, die UV-Stabilisatoren vom Triazoltyp und phosphorhaltige Flammschutzmittel enthalten können.

Die JP-A 58-067411 beschreibt thermoformbare Polyesterfolien, die als Additive UVStabilisatoren und Flammschutzmittel enthalten können.

Aufgabe der vorliegenden Erfindung ist es, eine transparente, flammhemmend ausgerüstete, UV-stabile, thermoformbare, orientierte Folie mit einer Dicke von bevorzugt 10 - 350 μm bereitzustellen, die neben einer wirtschaftlichen Herstellung, einer guten Verstreckbarkeit und guten mechanischen sowie optischen Eigenschaften, vor allem eine flammhemmende Wirkung, keine Versprödung nach Temperaturbelastung, gute Thermoformbarkeit und eine hohe UV-Stabilität aufweist.

Eine flammhemmende Wirkung bedeutet, dass die transparente Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des Weiteren soll die Folie den UL-Test 94 (Vertical Buming Test for Flammability of Plastic Material) bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Eine hohe UV-Stabilität bedeutet, dass die Folien durch Sonnenlicht oder andere UV-Strahlung nicht oder nur extrem wenig geschädigt werden, so dass sich die Folien oder daraus hergestellten Formkörper für Außenanwendungen und/oder kritische Innenanwendungen eignen. Insbesondere sollen die Folien bei mehrjähriger Außenanwendungen nicht vergilben, keine Versprödungen oder Rißbildung der Oberfläche zeigen und auch keine Verschlechterung der mechanischen Eigenschaften insgesamt aufweisen. Hohe UV-Stabilität bedeutet demnach, dass die Folie das UV-Licht absorbiert und Licht erst im sichtbaren Bereich durchlässt.

Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen läßt.

Zu den guten optischen Eigenschaften zählen beispielsweise eine hohe Lichttransmission (> 80%), ein hoher Oberflächenglanz (> 100), eine extrem niedrige Trübung (< 20 %) sowie eine niedrige Gelbzahl (YID < 10).

Zu den guten mechanischen Eigenschaften zählt unter anderem eine hoher E-Modul ($E_{MD}$> 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch ich Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit gängigen Industrietrocknern, die dem Stand der Technik genügen, getrocknet werden können. Wesentlich ist, dass die Rohstoffe nicht verkleben und nicht thermisch abgebaut werden. Zu diesen Industrietrocknern nach dem Stand der Technik zählen Vakuumtrockner; Wirbelschichttrockner; Fließbetttrockner; Festbetttrockner (Schicht trockner).

Diese Trockner arbeiten bei Temperaturen zwischen 100 und 170 °C, bei denen die erwähnten flammhemmend ausgerüsteten Rohstoffe verkleben, so dass keine Folienherstellung möglich ist.

Bei dem am schonensten trocknenden Vakuumtrockner durchläuft der Rohstoff einen Temperaturbereich von ca, 30 °C bis 130 °C bei einem Vakuum von 50 mbar. Danach ist ein sog. Nachtrocknen in einem Hopper bei Temperaturen von 100 - 130 °C und einer Verweilzeit von 3 bis 6 Stunden erforderlich. Selbst hier verklebt der genannte Rohstoff extrem.

Keine Versprödungen nach Temperaturbelastung bedeutet, dass die Folie nach 100 Stunden Tempervorgang bei 100 °C in einem Umluftofen keine Versprödung und keine nachteiligen mechanischen Eigenschaften aufweist.

Gelöst wird die erfindungsgemäße Aufgabe durch eine transparente thermoformbare, orientierte Folie aus einemkristallisierbaren Thermoplasten oder einer Mischung verschiedener kristallisierbarer Thermoplasten, die einen Diethylenglykolgehalt und/oder einen Polyethylenglykolgehalt von ≥ 1,0 Gew.-% und/oder einen Isophthalsäuregehalt von 3 bis 10 Gew.-% aufweisen, als Hauptbestandteil und mindestens einer in dem Thermoplasten löslichen, organischen Phosphorverbindung als Flammschutzmittel und mindestens einem UV-Stabilisator aus der Gruppe 2-Hydroxybenzotriazole oder Triazine, wobei der UV-Stabilisator mindestens 7% des UV-Lichtes im Wellenlängenbereich von 180 nm bis 380 nm absorbiert. Diese Folie ist mono oder biaxial orientiert/verstreckt.

Die transparente Folie enthält als Hauptbestandteil einen kristallisierbaren Thermoplasten. Erfindungsgemäß versteht man unter kristallisierbaren Thermoplasten kristallisierbare Homopolymere; kristallisierbare Copolymere; kristallisierbare Compounds; kristallisierbares Rezyklat und andere Variationen von kristallisierbaren Thermoplasten.

Geeignete kristallisierbare bzw. teilkristalline Thermoplasten sind bevorzugt Polyester wiez.B. Polyethylenterephthalat, Polybutylenterephthalat, Polyethylennaphthalat, wobei Polyethylenterephthalat (PET) bevorzugt ist.

Erfindungswesentlich ist, dass der kristallisierbare Thermoplast ein Diethylenglykolgehalt (DEG-Gehalt) von ≥1,0 Gew.%, vorzugsweise ≥1,2 Gew.%, insbesondere ≥ 1,3 Gew.% und/oder ein Polyethylenglykolgehalt (PEG-Gehalt) von ≥1,0 Gew.%, vorzugsweise ≥1,2 Gew.%, insbesondere ≥1 ,3 Gew.% und/oder ein Isophthalsäuregehalt (IPA) von 3 Gew.% bis 10 Gew.% aufweist.

Es war mehr als überraschend, dass sich die Folien durch ein im Vergleich zum Standardthermoplasten höheren Diethylenglykolgehalt und/oder Polyethylenglykolgehalt und/oder IPA-Gehalt wirtschaftlich auf handelsüblichen lietziehanlagen thermoformen lassen und eine hervorragende Detailwiedergabe liefern.

Es können auch Mischungen aus kristallisierbaren Thermoplasten verwendet werden. Bevorzugt weisen die kristallisierbaren Thermoplasten Kristallinitäten im Bereich von 5 bis 65% auf.

Die transparente Folie kann sowohl einschichtig als auch mehrschichtig sein. Die Folie kann ebenfalls mit diversen Copolyestern oder Haftvermittlern beschichtet sein.

Die transparente Folie enthält erfindungsgemäß mindestens einen UV-Absorber und mindestens ein Flammschutzmittel. Der UV-Absorberwird zweckmäßigerweise über die sogenannte Masterbatch-Technologie direkt bei der Folienherstellung zudosiert wird, wobei die Konzentration des UV-Stabilisators vorzugsweise zwischen 0,01 Gew.-% und 5 Gew.%, insbesondere zwischen 0,1 bis 4 Gew.-% bezogen auf das Gewicht der Schicht des kristallisierbaren Thermoplasten liegt.

Das Flammschutzmittels wird erfindungsgemäß über die sogenannte Masterbatch-Technologie direkt bei der Folienherstellung zudosiert, wobei die Konzentration zwischen 0,5 und 30 Gew.-%, vorzugsweise zwischen 1 und 20 Gew.%, bezogen auf das Gewicht der Schicht des kristallisierbaren Thermoplasten, liegt.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen

führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind 2-Hydroxybenzotriazole und Triazine.

Der oder die UV-Stabilisatoren sind vorzugsweise in der/den Deckschichten enthalten. Bei Bedarf kann auch die Kernschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca.10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte erfestgestellt, dass die mechanischen Eigenschaften negativ beeinflusstwerden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate, wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/oder Alkali-lErdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris (3,5-di-Tertärbutyl-4-Hydroxybenzyl)benzol sind besonders vorteilhaft.

Daher war es mehr als überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Der Gelbwert der Folie im Vergleich zu einer nicht ausgerüsteten Folie im Rahmen der Meßgenauigkeit nicht negativ beeinflusst ist,

Damit ist eine erfindungsgemäße Folie auch wirtschaftlich rentabel.

Des Weiteren ist sehr überraschend, dass auch das aus den Folien bzw. Formkörpern hergestellte Rezyklat wieder einsetzbar ist, ohne den Gelbwert der Folie negativ zu beeinflussen.

In einer ganz besonders bevorzugten Ausführungsform enthält die erfindungsgemäße Folie 0,01 Gew.% bis 5,0 Gew.-% 2-(4,6-Diphenyl-1,3,5-triazin 2-yl)-5-(hexyl)oxyphenol der Formel

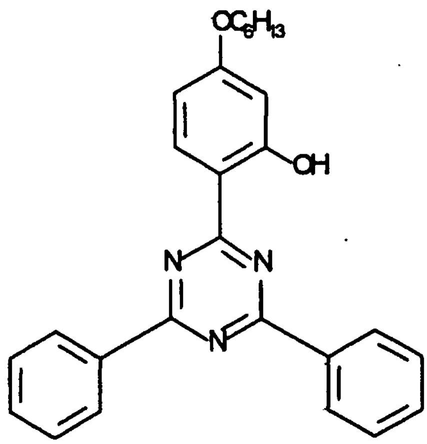

oder0,01 Gew.-% bis 5,0 Ges.-% 2, 2-M ethylen-bis(6-(2H-benzotriazol-2-yl)-4g 1 , 1 ,2,2-tetramethylpropyl)-phenol der Formel

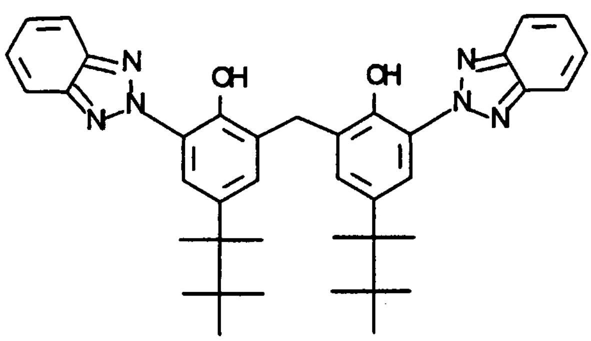

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Diese Angaben bzgl. Flammschutzmittel, UV- und Hydrolysestabilisator gelten auch im Hinblick auf andere

erfindungsgemäß zu verwendende Thermoplasten.

Der Oberflächenglanz, gemessen nach DIN 67530 (Messwinkel 20 °), ist größer als 100, vorzugsweise größer als 120, die Lichttransmission L, gemessen nach ASTM D 1003 beträgt mehr als 80 %, vorzugsweise mehr als 84% und die Trübung der Folie gemessen nach ASTM S 1003, beträgt weniger als 20%, vorzugsweise weniger als 15 . %, welches für die erzielte UV-Stabilität in Kombination mit der Schwerentflammbarkeit überraschend gut ist.

Die Standardviskosität SV (DCE) des Polyethylenterephthalats, gemessen in Dichloressigsäure nach DIN 53728, liegt zwischen bevorzugt 600 und 1000, vorzugsweise zwischen 700 und 900. Der Kristallitschmelzpunkt, gemessen mit DSC mit einer Aufheizgeschwindigkeit von 10 °C/min, liegt bevorzugt im Bereich von 220 - 280 °C.

Das Polyethylenterephthalat (PET) zeichnet sich bevorzugt dadurch aus, dass der Diethylenglykolgehalt (DEG-Gehalt) und/oder Polyethylenglykolgehalt (PEG-Gehalt) bei größer 1,3 Gew.%, insbesondere größer 1,5 Gew.% liegt. In einer besonders bevorzugten Ausführungsform liegt der DEG-Gehalt und/oder PEG-Gehalt zwischen 1,6 Gew.% und 5 Gew.%.

Es ist dabei überraschend, dass sich orientierte PET-Folien durch einen im Vergleich zum Standardpolyester höheren Diethylenglykolgehalt und/oder Polyethylenglykolgehalt thermoformen lassen.

Der Thermoformprozess umfaßt in der Regel die Schritte Vortrocknen, Aufheizen, Formen, Abkühlen, Entformen, Tempern. Beim Thermoformprozess wurde festgestellt, dass sich die erfindungsgemäßen Folien ohne vorheriges Vortrocknen überraschender weise tiefziehen lassen. Dieser Vorteil im Vergleich zu tiefziehfähigen Polycarbonat- oder Polymethacrylat-Folien, bei denen je nach Dicke Vortrocknungszeiten von 10 - 15 Stunden, bei Temperaturen von 100 °C bis 120 °C erforderlich sind, reduziert drastisch die Kosten des Umformprozesses.

Die erfindungsgemäße Folie, bevorzugt PET-Folie, die mindestens einen UV-Stabilisator und ein Flammschutzmittel enthält und thermoformbar ist, kann sowohl einschichtig als auch mehrschichtig sein.

In der mehrschichtigen Ausführungsform ist die Folie aus mindestens einer Kemschicht und mindestens einer Deckschicht aufgebaut, wobei insbesondere ein dreischichtiger A-B-A oder A-B-C Aufbau bevorzugt ist. Die Schichtdicken der Deckschichten betragen bevorzugt 0,5 bis 2 μm.

Für diese Ausführungsform ist es wesentlich, dass der kristallisierbare Thermoplast z.B. das Polyethylenterephthalat der Kernschicht eine ähnliche Standardviskosität und einen ähnlichen DEG-Gehalt und/oder PEG-Gehalt besitzt, wie z.B. das Polyethylenterephthalat bzw. der Thermoplast der Deckschicht (en), die an die Kemschicht angrenzt (angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen.

In dieser Ausführungsform haben die Thermoplaste der Deckschichten ebenfalls eine ähnliche Standardviskosität wie z.B. das Polyethylenterephthalat der Kernschicht.

In der mehrschichtigen Ausführungsform ist der UV-Absorber vorzugsweise in den Deckschichten enthalten. Bei Bedarf kann auch die Kernschicht mit UV-Absorber ausgerüstet sein.

In der mehrschichtigen Ausführungsform ist das Flammschutzmittel vorzugsweise in der Kemschicht enthalten. Jedoch können bei Bedarf auch die Deckschichten mit Flammschutzmittel ausgerüstet sein.

In einer anderen Ausführungsform können auch Flammschutzmittel und UV-Absorber in den Deckschichten enthalten sein. Bei Bedarf und hohen Brandschutzanforderungen kann die Kemschicht additiv eine sogenannte Grundausrüstung an Flammschutzmittel enthalten.

Anders als in der einschichtigen Ausführungsform bezieht sich hier die Konzentration des Flammschutzmittels und des UV-Stabilisators auf das Gewicht in der ausgerüsteten Schicht. Die Konzentrationsbereiche sind identisch mit denen in der Basisschicht.

Ganz überraschend haben Bewitterungsversuche nach der Testspezifikation ISO 4892 mit dem Atlas C165 Weather Ometer gezeigt, dass es im Falle einer dreischichtigen Folie durchaus ausreichend ist, die bevorzugt 0,5 um bis 2 μm dicken Deckschichten mit UV-Stabilisatoren auszurüsten, um eine verbesserte UV-Stabilität zu erreichen.

Brandversuche nach DIN 4102 Teil 1 und Teil 2 sowie der UL-Test 94 haben ebenso überraschend gezeigt, dass die erfindungsgemäßen Folien diese Anforderungen erfüllen.

Dadurch werden die mit der bekannten Koextrusionstechnologie hergestellten schwerentflammbaren, UV-stabilisierten, thermoformbaren, mehrschichtigen Folien im Vergleich zu den komplett UV-stabilisierten und flammausgerüsteten Monofolien wirtschaftlich interessant, da weniger Additive zu einervergleichbaren Schwerentflammbarkeit und UV-Stabilität benötigt werden.

Die Folie kann auch mindestens einseitig mit einerkratzfesten Beschichtung, mit einem Copolyester oder mit einem Haftvermittler versehen sein.

Bewitterungstests haben ergeben, dass die erfindungsgemäßen Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der erfindungsgemäßen Folie wurde ferner festgestellt, dass sich diese hervorragend in Längs- und in Querrichtung ohne Abrisse orientieren läßt. Des Weiteren wurden keinerlei Ausgasungen des UV-Stabilisators oder Flammschutzmittels im Produktionsprozess gefunden, was sehr vorteilhaft ist, da die meisten UV-Stabilisatoren und Flammschutzmittel bei Extrusionstemperaturen über 260 °C störende Ausgasungen zeigen und damit untauglich sind.

Überraschenderweise erfüllen schon erfindungsgemäße Folien im Dickenbereich von 5 bis 350 µm die Baustoffklasse B1 nach DIN 4102 Teil 1 und den UL-Test 94.

Bei der Herstellung der erfindungsgemäßen Folie wurde weiter festgestellt, dass sich das Flammschutzmittel mittels Masterbatch-Technologie, einer geeigneten Vortrocknung bzw. Vorkristallisation des Flammschutz-Masterbatches ohne Verklebungen im Trockner einarbeiten läßt, so dass eine wirtschaftliche Folienproduktion möglich ist.

Mehr als überraschend war, dass durch eine zusätzliche geringe Konzentration eines Hydrolysestabilisators im Flammschutz-Masterbatch die Einarbeitung nochmals erleichtert wird, so dass ohne Probleme die Durchsätze und damit die Produktiongeschwindigkeiten erhöht werden können. In einer sehr speziellen Ausführungsform enthält die Folie auch noch in den Schichten, die mit Flammschutzmittel ausgerüstet sind, geringe Mengen eines Hydrolysestabilisators.

Darüber ergaben Messungen, dass die erfindungsgemäße Folie bei Temperaturbelastungen von 100 °C über einen längeren Zeitraum nicht versprödet. Dieses Resultat wird auf die synergistische Wirkung von geeigneter Vorkristallisation, Vortrocknung, Masterbatch-Technologie und UV-Stabilisatorausrüstung zurückgeführt.

Darüberhinaus läßt sich die Folie auch ohne Vortrocknen thermoformen, so dass komplexe Formkörper daraus hergestellt werden können.

Für das Thermoformen wurden beispielsweise folgende Verfahrensparameter gefunden:

| Verfahrensschritt | Erfindungsgemäße Folie |
|---|---|
| Vortrocknen | Nicht erforderlich |
| Temperatur der Form °C | 100 -160 |
| Aufheizzeit | < 5 sec pro 10 µm Dicke |
| Folientemperatur beim Verformen °C | 160 - 200 |
| Möglicher Verstreckfaktor | 1,5 -2,0 |
| Detailwiedergabe | Gut |
| Schrumpf (Schwindung) % | < 1,5 |

Des Weiteren ist die erfindungsgemäße Folie bzw. der Formkörper ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz und . Thermoformbarkeit gewünscht wird, eignet.

Die Herstellung der erfindungsgemäßen Folie kann beispielsweise nach dem Extrusionsverfahren in einer Extrusionsstraße erfolgen.

Erfindungsgemäß wird dabei das Flammschutzmittel gegebenenfalls mit dem Hydrolysestabilisator über die Masterbatch-Technologie zugegeben. Das Flammschutzmittel wird in einem Trägermaterial dispergiert. Als Trägermaterial kommen der Thermoplast selbst, wie z. B. das Polyethylenterephthalat oder auch andere Polymere, die mit dem Thermoplasten verträglich sind, in Frage.

Das Lichtschutzmittel kann zweckmäßigerweise bereits beim Thermoplast-Rohstoffhersteller zudosiert werden oder bei der Folienherstellung in den Extruder dosiert werden.

Besonders bevorzugt ist die Zugabe des Lichtschutzmittels über die Masterbatch-Technologie. Das Lichtschutzmittel wird in einem festen Trägermaterial dispergiert. Als Trägermaterialien kommen gewisse Harze, der Thermoplast selbst, wie z. B. das Polyethylenterephthalat, oder auch andere Polymere, die mit dem Thermoplasten ausreichend verträglich sind, in Frage.

Der DEG-Gehalt und/oder PEG-Gehalt des Polyethylenterephthalates werden zweckmäßigerweise beim Rohstoffherstellerwährend des Polykondensationsprozesses eingestellt.

Wichtig bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit auch eine homogene UV-Stabilisierung erfolgen kann.

Die erfindungsgemäßen Folien können nach bekannten Verfahren z.B. aus einem Polyesterrohstoff mit ggf. weiteren Rohstoffen wie z.B. dem UV-Absorber und/oder weiteren üblichen Additiven in üblicher Menge von 1,0 bis max. 30 Gew.% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die

andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 ° bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Bei dem bevorzugten Extrusionsverfahren zur Herstellung einer erfindungsgemäßen Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- bzw. Querstreckung liegt bei 1,1 bis 5. Die erste Längsstreckung kann ggf. gleichzeitig mit einer Querstreckung (Simultanstreckung) durchgeführt werden. Anschließen folgt die Thermofixierung der Folie bei Ofentemperaturen von 180 bis 260 °C, insbesondere bei 220 bis 250 °C. Anschließend wird die Folie abgekühlt und gewickelt.

Durch die überraschende Kombination ausgezeichneter Eigenschaften eignen sich die erfindungsgemäße Folie und daraus hergestellte Formkörper hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Aufgrund der Thermoformbarkeit eignet sich die erfindungsgemäße Folie zum Thermoformen beliebiger Formkörper für Innen- und Außenanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren.

**Meßmethoden**

DIN = Deutsches Institut für Normung
ISO = International Organization for Standardization

**DEG-Gehalt/PEG.Gehalt/IPA-Gehalt**

Der DEG-/PEG-/IPA-Gehalt wird gaschromatografisch nach Verseifung in methanolischer KOH und Neutralisation mit wässrigem HCI bestimmt.

**Obertlächenglanz**

Der Oberflächenglanz wir bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "® HAZEGARD plus" nach ASTM D - 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.
Die Trübung wird mit dem Messgerät "HAZEGARD plus" nach ASTM D 1003

**Oberflächendefekte**

Die Oberflächendefekte werden visuell bestimmt.

**Mechanische Eigenschaften**

Der E-Modul und die Reißfestigkeit und die Reißdehnung werden in Längs- und Querrichtung nach ISO 527-1-2 gemessen.

**SV (DCE), IV (DVE)**

Die Standardviskosität SV (DCE) wird angelehnt an DIN 53726 in Dichloressigsäure gemessen.
Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Bewitterung (beidseitig), UV-Stabilität:**

Die UV-Stabilität wird nach der Testspezifikation ISO 4892 wie folgt geprüft

| | | |
|---|---|---|
| Testgerät | : | Atlas Ci 65 Weather Ometer |
| Testbedingungen | : | ISO 4892, d. h. künstliche Bewitterung |
| Bestrahlungszeit | : | 1000 Stunden (pro Seite) |
| Bestrahlung | : | 0,5 W/m$^2$, 340 nm |
| Temperatur | : | 63 °C |
| Relative Luftfeuchte | : | 50 % |
| Xenonlampe | : | innerer und äußerer Filter aus Borosilikat |
| Bestrahlungszyklen | : | 102 Minuten UV-Licht, dann 18 Minuten UV-Licht mit Wasserbesprühung der Proben dann wieder 102 Minuten UV-Licht usw. |

Numerische Werte von < 0,6 sind vernachlässigbar und bedeuten, dass keine signifikante Farbänderung vorliegt.

**Gelbwert**

Der Gelbwert (YID) ist die Abweichung von der Farblosigkeit in Richtung "Gelb" und wird gemäß DIN 6167 gemessen. Gelbwerte (YID) von < 5 sind visuell nicht sichtbar.
Bei nachstehenden Beispielen und Vergleichsbeispiefen handelt es sich jeweils um transparente Folien unterschiedlicher Dicke, die auf der beschriebenen Extrusionsstraße hergestellt werden.
Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.
An allen Folien wurden Brandtests nach DIN 4102, Teil 2 und Teil 1 und nach UL-Test 94 durchgeführt.

## Beispiele

### Beispiel 1

Es wird eine 50 µm dicke, transparente Folie hergestellt, die als Hauptbestandteil Polyethylenterephthalat, 0,2 Gew.% Sylobloc® (Siliciumdioxid) als Antiblockmittel, 4 Gew.% der organischen Phosphorverbindung als Flammschutzmittel und 1,0 Gew.-% des UV-Absorbers 2-(4,6-Diphenyl-1,3,5 triazin-2yl)-5-(hexyl) oxyphenol (® Tinuvin 1577, Fa. Ciba-Geigy) enthält. Tinuvin 1577® hat einen Schmelzpunkt von 149 °C und ist bis ca. 330 °C thermisch stabil.

Zwecks homogener Verteilung werden 0,2 Gew.% Sylobloc direkt beim Rohstoffhersteller in das Polyethylenterephthalat (PET) eingearbeitet.

Das Polyethylenterephthalat, aus dem die transparente Folie hergestellt wird, hat eine Standardviskosität SV (DCE) von 810, was einer intrinsischen Viskosität IV (DCE) von 0,658 dl/g entspricht. Der DEG-Gehalt sowie der PEG-Gehalt betragen 1,6 Gew.-%.

® Tinuvin 1577 hat einen Schmelzpunkt von 149 °C und ist bis ca. 330 °C thermisch stabil.

Der UV-Stabilisator ® Tinuvin 1577 wird in Form eines Masterbatches zudosiert. Das Masterbatch setzt sich aus 5 Gew.% ® Tinuvin 1577 als Wirkstoffkomponente und 95 Gew.% PET mit einer Standardviskosität von SC (DCE) = 810, was einer intrinsischen Viskosität IV (DCE) von 0,658 dl/g entspricht.

Bei dem Flammschutzmittel handelt es sich um die in PET lösliche organische Phosphorverbindung Dimethyl-Methylphosphonat ® Amgard P1045 der Fa. Albright & Wilson.

Das Flammschutzmittel wird ebenfalls in Form eines Masterbatches zudosiert. Das Masterbatch setzt sich aus 20 Gew.% Flammschutzmittel und 80 Gew.-% PET mit einer Standardviskosität SV (DCE) von 810 zusammen.

Beide Masterbatche haben ein Schüttgewicht von 750 kg/$m^3$.

40 Ges.-% PET mit 0,2 Gew.% Sylobloc, 30 Gew.% PET-Rezyklat, 10 Gew.% UV-Masterbatch und 20 Gew. % Flammschutz-Masterbatch werden bei Raumtemperatur aus separaten Dosierbehältern in einen Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 h nachgetrocknet. Anschließend wird mit dem beschriebenen Extrusionsverfahren die 50 µm Monofolie hergestellt.

Die hergestellte transparente PET-Folie hat folgendes Eigenschaftsprofil:

| | | |
|---|---|---|
| Dicke | : | 50 µm |
| Oberflächenglanz 1. Seite | : | 155 |
| (Messwinkel 20°) 2. Seite | : | 152 |
| Lichttransmission | : | 91 % |
| Trübung | : | 4,0 % |
| Oberflächendefekte pro $m^2$ (Risse, Versprödungen) | : | keine |
| E-Modul längs | : | 3550N/$mm^2$ |
| E-Modul quer | : | 4700 N/$mm^2$ |
| Reissfestigkeit längs | : | 110 N/$mm^2$ |
| Reissfestigkeit quer | : | 190 N/$mm^2$ |
| Gelbzahl (YID) | : | 3,1 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2/Teil 1 die Anforderungen der Baustoffklassen B 2 und B 1. Die Folie besteht den UL-Test 94.

Nach je 1000 Stunden Bewitterung pro Seite mit dem Atlas Ci 65 Weather Ometer zeigt die PET-Folie folgende Eigenschaften:

| | | |
|---|---|---|
| Dicke | : | 50 µm |
| Oberflächenglanz 1. Seite | : | 148 |
| (Messwinkel 20°) 2. Seite | : | 146 |
| Lichttransmission | : | 89,9 % |
| Trübung | : | 4,2 % |

(fortgesetzt)

| | | |
|---|---|---|
| Oberflächendefekte pro $m^2$ (Risse, Versprödungen) | : | keine |
| E-Modul längs | : | 3400N/$mm^2$ |
| E-Modul quer | : | 4550 N/$mm^2$ |
| Reissfestigkeit längs | : | 102 N/$mm^2$ |
| Reissfestigkeit quer | : | 178 N/$mm^2$ |
| Gelbzahl (YID) | : | 3,2 |

**Beispiel 2**

Nach der Koextrusionstechnologie wird eine 17 μm dicke mehrschichtige PET-Folie mit der Schichtreihenfolge A-B-A hergestellt, wobei B die Kemschicht und A die Deckschichten repräsentieren. Die Kemschicht ist 15 μm dick und die beiden Deckschichten, die die Kemschicht überziehen, sind jeweils 1 μm dick.

Das für die Kernschicht B eingesetzt Polyethylenterephthalat ist identisch mit dem aus Beispiel 1, enthält aber kein Sylobloc. Die Kernschicht enthält 0,2 Gew.% Hydrolysestabilisator und 5 Ges.-% Flammschutzmittel. Der Hydrolysestabilisator und das Flammschutzmittel werden wie im Beispiel 1 in Form eines Masterbatches zudosiert. Das Masterbatch setzt sich aus 25 Gew.% Flammschutzmittel, 1 Ges.-% Hydrolysestabilisator und 74 Gew.% Polyethylenterephthalat zusammen. Das Flammschutzmittel ist identisch mit dem aus Beispiel 1. Bei dem Hydrolysestabilisator handelt es sich um Pentaerythrityl Tetrakis-3-(3,5-di-Tertiärbutyl-4-Hydroxyphenyl)-Propionat.

Das Polyethylenterephthalat der Deckschichten A ist identisch mit Polyethylenterephthalat aus Beispiel 1, d. h. der Deckschichtrohstoff ist mit 0,2 Gew.% Sylobloc ausgerüstet. Die Deckschichten enthalten keinen Hydrolysestabilisator und keine Flammschutzmittel. Die Deckschichten enthalten zusätzlich 1,0 Gew.% Tinuvin 1577, was direkt beim Rohstoffhersteller eingearbeitet wurde.

Für die Kemschicht werden 50 Gew.% Polyethylenterephthalat, 30 Gew.-% Polyethylenterephthalat-Rezyklat und 20 Ges.-% des beschriebenen Masterbatches entsprechend Beispiel 1 vorkristallisiert, vorgetrocknet und nachgetrocknet.

Der Deckschichtrohstoff, der Sylobloc und 1 Gew.% Tinuvin 1577 enthält, erfährt keine besondere Trocknung. Mittels Koextrusionstechnologie wird eine 17 μm dicke Folie mit der Schichtreihenfolge A-B-A hergestellt, die folgendes Eigenschaftsprofil zeigt:

| | | |
|---|---|---|
| Schichtaufbau | : | A-B-A |
| Dicke | : | 17 μm |
| Oberflächenglanz 1. Seite | : | 174 |
| (Messwinkel 20°) 2. Seite | : | 169 |
| Lichttransmission | : | 94,2 % |
| Trübung | : | 2,1 % |
| Oberflächendefekte pro $m^2$ (Risse, Versprödungen) | : | keine |
| E-Modul längs | : | 3500N/$mm^2$ |
| E-Modul quer | : | 4150 N/$mm^2$ |
| Reissfestigkeit längs | : | 120 N/$mm^2$ |
| Reissfestigkeit quer | : | 155 N/$mm^2$ |
| Gelbzahl (YID) | : | 2,7 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Anforderungen der Baustofflclassen B 2 und B 1. Die Folie besteht den UL Test.

Nach je 1000 Stunden Bewitterung pro Seite mit dem Atlas Ci 65 Weather Ometerzeigt die PET-Folie folgende Eigenschaften:

| | | |
|---|---|---|
| Dicke | : | 17 μm |
| Oberflächenglanz 1. Seite | : | 168 |

(fortgesetzt)

| | | |
|---|---|---|
| (Messwinkel 20°) 2. Seite | : | 160 |
| Lichttransmission | : | 91,6 % |
| Trübung | : | 2,9 % |
| Oberflächendefekte pro $m^2$ (Risse, Versprödungen) | : | keine |
| E-Modul längs | : | 3400N/$mm^2$ |
| E-Modul quer | : | 4000 N/$mm^2$ |
| Reissfestigkeit längs | : | 105 N/$mm^2$ |
| Reissfestigkeit quer | : | 145 N/$mm^2$ |
| Gelbzahl (YID) | : | 3,2 |

**Beispiel 3**

Entsprechend Beispiel 2 wird eine 20 µm A-B-A-Folie hergestellt, wobei die Kemschicht B 16 µm und die Deckschichten A jeweils 2 µm dick sind.

Die Kemschicht B enthält nur 5 Gew.% des Flammschutzmittel-Masterbatches aus Beispiel 2.

Die Deckschichten sind identisch mit denen aus Beispiel 2, enthalten aber noch zusätzlich 20 Gew.-% des Flammschutz-Masterbatches, welches in Beispiel 2 nur für die Kemschicht eingesetzt wurde.

Die Rohstoffe und die Masterbatche für die Kemschicht und die Deckschichten werden entsprechend Beispiel 1 vorkristallisiert, vorgetrocknet und nachgetrocknet.

Die mittels Koextrusionstechnologie hergestellte, mehrschichtige 20. µm Folie hat folgendes Eigenschaftsprofil:

| | | |
|---|---|---|
| Schichtaufbau | : | A-B-A |
| Dicke | : | 20 µm |
| Oberflächenglanz 1. Seite | : | 165 |
| (Messwinkel 20°) 2. Seite | : | 169 |
| Lichttransmission | : | 92,0 % |
| Trübung | : | 2,5 % |
| Oberflächendefekte pro $m^2$ (Risse, Versprödungen) | : | keine |
| E-Modul längs | : | 3450N/$mm^2$ |
| E-Modul quer | : | 4000 N/$mm^2$ |
| Reissfestigkeit längs | : | 125 N/$mm^2$ |
| Reissfestigkeit quer | : | 160 N/$mm^2$ |
| Gelbzahl (YID) | : | 2,9 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Anforderungen der Baustoffklassen B2 und B1. Die Folie besteht den UL-Test.

Nach je 1000 Stunden Bewitterung pro Seite mit dem Atlas Ci 65 Weather Ometer zeigt die PET-Folie folgende Eigenschaften:

| | | |
|---|---|---|
| Dicke | : | 20 µm |
| Oberflächenglanz 1. Seite | : | 161 |
| (Messwinkel 20°) 2. Seite | : | 155 |
| Lichttransmission | : | 91,2 % |
| Trübung | : | 3,1 % |
| Oberflächendefekte pro $m^2$ (Risse, Versprödungen) | : | keine |
| E-Modul längs | : | 3400N/$mm^2$ |
| E-Modul quer | : | 3850 N/$mm^2$ |
| Reissfestigkeit längs | : | 115 N/$mm^2$ |
| Reissfestigkeit quer | : | 145 N/$mm^2$ |
| Gelbzahl (YID) | : | 3,5 |

**Thermoformbarkeit**

Die Folien aus den Beispielen 1 bis 3 lassen sich auf handelsüblichen Tiefziehmaschinen, z.B. von Fa. Illig, ohne Vortrocknung zu Formkörpern thermoformen. Die Detailwiedergabe der Formkörper ist bei einer homogenen Oberfläche hervorragend.

**Vergleichsbeispiel 1**

Beispiel 2 wird wiederholt. Die Folie wird aber nicht mit UV-Absorbem und nicht mit Flammschutzmittel-Masterbatch ausgerüstet, d. h. die Folie enthält keinen Hydrolysestabilisator, kein Flammschutzmittel und keinen UV-Absorber. Der DEG-Gehalt liegt bei handelsüblichen 0,7 Gew.-%, PEG ist nicht enthalten.
Die hergestellte transparente PET-Folie hat folgendes Eigenschaftsprofil:

| | | |
|---|---|---|
| Dicke | : | 17 μm |
| Oberflächenglanz 1. Seite | : | 175 |
| (Messwinkel 20°). 2. Seite | : | 165 |
| Lichttransmission | : | 92 % |
| Trübung | : | 2,3 % |
| Oberflächendefekte pro $m^2$ | : | keine |
| E-Modul längs | : | $4100 N/mm^2$ |
| E-Modul quer | : | $4800 N/mm^2$ |
| Reissfestigkeit längs | : | $180 N/mm^2$ |
| Reissfestigkeit quer | : | $210 N/mm^2$ |
| Gelbzahl (YID) | : | 2,8 |

Die unausgerüstete Folie erfüllt die Tests nach DIN 4102 Teil 1 und Teil 2 sowie den UL Test 94 nicht.
Die Folie ist unzureichend thermoformbar.
Nach 1000 Stunden Bewitterung pro Seite mit dem Atlas CI Weather Ometer weist die Folie an den Oberflächen Risse und Versprödungserscheinungen auf. Ein präzises Eigenschaftsprofil - insbesondere die mechanischen Eigenschaften - kann daher nicht mehr gemessen werden. Außerdem zeigt die Folie eine sichtbare Gelbfärbung.

**Patentansprüche**

1. Transparente thermoformbare, orientierte Folie aus einem kristallisierbaren Thermoplasten oder einer Mischung verschiedener kristallisierbarer Thermoplasten, die einen Diethylenglykolgehalt und/oder einen Polyethylenglykolgehalt von ≥ 1 Gew.-% und/oder einen Isophthalsäuregehalt von 3 bis 10 Gew.-% aufweisen, als Hauptbestandteil und mindestens einer in dem Thermoplasten löslichen, organischen Phosphorverbindung als Flammschutzmittel und mindestens einem UV-Stabilisator aus der Gruppe 2-Hydroxybenzotriazole oder Triazine, wobei der UV-Stabilisator mindestens 70 % des UV-Lichtes im Wellenlängenbereich von 180 nm bis 380 nm absorbiert.

2. Folie gemäß Anspruch 1, **dadurch gekennzeichnet, dass** der Thermoplast eine Kristallinität im Bereich von 5 - 65 % aufweist.

3. Folie gemäß Anspruch 1 oder 2, **dadurch gekennzeichnet, dass** als Thermoplast ein Polyester verwendet wird.

4. Folie gemäß einem oder mehreren der Ansprüche 1 bis 3, **dadurch gekennzeichnet, dass** als Thermoplast Polyethylenterephthalat, Polybutylenterephthalat oder Polyethylennaphthalat verwendet wird.

5. Folie gemäß einem oder mehreren der Ansprüche 1 bis 4, **dadurch gekennzeichnet, dass** als Thermoplast Polyethylenterephthalat verwendet wird.

6. Folie gemäß Anspruch 5, **dadurch gekennzeichnet, dass** das Polyethylenterephthalat einen Diethylenglykolgehalt und/oder einer Polyethylenglykolgehalt von größer 1,3 Gew.-%, bevorzugt von 1,6 - 5 Gew.-%, aufweist.

7. Folie gemäß Anspruch 5 oder 6, **dadurch gekennzeichnet, dass** das Polyethylenterephthalat eine Standardviskosität SV (DCE) von 600 -1000 aufweist.

8. Folie gemäß einem oder mehreren der Ansprüche 1 bis 7, **dadurch gekennzeichnet, dass** als Flammschutzmittel organische Phosphorverbindungen oder Mischungen von organischen Phosphorverbindungen und als UV-Stabilisatoren 2-Hydroxybenzotriazole oder Triazine oder Mischungen dieser UV-Stabilisatoren verwendet werden.

9. Folie gemäß einem oder mehreren der Ansprüche 1 bis 8, **dadurch gekennzeichnet, dass** als UV-Stabilisator 2-(4,6-Diphenyl-1,3,5-triazin-2-yl)-5-(hexyl)-oxyphenol oder 2,2'-Methylen-bis-6-(2H-benzotriazol-2-yl)-4-(1,1,2,2-tetramethylpropyl)-phenol oder Mischungen dieser UV-Stabilisatoren mit anderen verwendet werden.

10. Folie gemäß einem oder mehreren der Ansprüche 1 bis 9, **dadurch gekennzeichnet, dass** die Konzentration des UV-Stabilisators oder der UV-Stabilisatoren 0,01 - 5 Gew.-%, bezogen auf das Gewicht der Schicht des kristallisierbaren Thermoplasten oder der kristallisierbaren Thermoplasten, in der sich der UV-Stabilisator befindet, beträgt.

11. Folie gemäß einem oder mehreren der Ansprüche 1 bis 10, **dadurch gekennzeichnet, dass** als Flammschutzmittel Dimethyl-Methylphosphonat verwendet wird.

12. Folie gemäß einem oder mehreren der Ansprüche 1 bis 11, **dadurch gekennzeichnet, dass** die Konzentration des Flammschutzmittels oder der Flammschutzmittel 0,5 - 30 Gew.%, bevorzugt 1 - 20 Gew.-%, bezogen auf das Gewicht der Schicht des kristallisierbaren Thermoplasten oder der kristallisierbaren Thermoplasten, in der sich das Flammschutzmittel befindet, beträgt.

13. Folie gemäß einem oder mehreren der Ansprüche 1 bis 12, **dadurch gekennzeichnet, dass** sie einen Hydrolysestabilisator, bevorzugt 0,1 - 1 Gew.-% bezogen auf das Gewicht der Schicht deskristallisierbaren Thermoplasten oder der kristallisierbaren. Thermoplasten, in der sich der Hydrolysestabilisator befindet, enthält.

14. Folie gemäß einem oder mehreren der Ansprüche 1 bis 13, **dadurch gekennzeichnet, dass** als Hydrolysestabilisator Pentaerythrityl-tetrakis-3-(3,5-di-tertiärbutyl-4-hydroxyphenyl)-propionat oder 1,3,5-Trimethyl-2,4,6-tris(3,5-di-tertiärbutyl-4-hydroxybenzyl)-benzol verwendet wird.

15. Folie gemäß einem oder mehreren der Ansprüche 1 bis 14, **dadurch gekennzeichnet, dass** es sich um eine mehrschichtige Folie handelt.

16. Folie gemäß Anspruch 15, **dadurch gekennzeichnet, dass** das Flammschutzmittel und /oder der UV-Stabilisator lediglich in der Deckschicht oder den Deckschichten enthalten sind.

17. Folie gemäß einem oder mehreren der Ansprüche 1 bis 16, **dadurch gekennzeichnet, dass** sie eine Dicke von 1 - 350 μm aufweist.

18. Verfahren zur Herstellung einer Folie gemäß einem oder mehreren der Ansprüche 1, bis 17, **dadurch gekennzeichnet, dass** man einen kristallisierbaren Thermoplast oder eine Mischung aus kristallisierbaren Thermoplasten in einem Extruder zusammen mit mindestens einem Flammschutzmittel und mindestens einem UV-Stabilisator und gegebenenfalls einem Hydrolysestabilisator aufschmilzt, extrudiert, biaxial orientiert und fixiert, wobei das Flammschutzmittel, der UV-Stabilisator und gegebenenfalls der Hydrolysestabilisator mittels der Masterbatch-Technologie zugesetzt werden, wobei das Masterbatch, welcher das Flammschutzmittel und gegebenenfalls den Hydrolysestabilisator enthält, vorkristallisiert bzw. vorgetrocknet wird, wobei diese Vortrocknung ein graduelles Erhitzen des Masterbatches unter einem Druck von 20 bis 80 mbar und Rühren beinhaltet.

19. Verwendung einer Folie gemäß einem oder mehreren der Ansprüche 1 bis 17 zur Herstellung von Formkörpern.

20. Formkörper hergestellt unter Verwendung einer Folie gemäß einem oder mehreren der Ansprüche 1 bis 17.

## Claims

1. A transparent, thermoformable, oriented film made from a crystallizable thermoplastic or from a mixture of various crystallizable thermoplastics as principal constituent, having a diethylene glycol content and/or a polyethylene glycol content of ≥ 1 % by weight and/or an isophthalic acid content of from 3 to 10 % by weight, and from at least one

organophosphorus compound as flame retardant soluble in the thermoplastic, and from at least one UV stabilizer selected from the group consisting of 2-hydroxybenzotriazoles or triazines, the UV stabilizer absorbing at least 70 % of the UV light in the wavelength region from 180 nm to 380 nm.

**2.** The film as claimed in claim 1, wherein the thermoplastic has a crystallinity of from 5 to 65 %.

**3.** The film as claimed in claim 1 or 2, wherein the thermoplastic used comprises a polyester.

**4.** The film as claimed in one or more of claims 1 to 3, wherein the thermoplastic used comprises polyethylene terephthalate, polybutylene terephthalate or polyethylene naphthalate.

**5.** The film as claimed in one or more of claims 1 to 4, wherein the thermoplastic used comprises polyethylene terephthalate.

**6.** The film as claimed in claim 5, wherein the polyethylene terephthalate has a diethylene glycol content and/or a polyethylene glycol content of more than 1.3 % by weight, preferably from 1.6 to 5 % by weight.

**7.** The film as claimed in claim 5 or 6, wherein the polyethylene terephthalate has a standard viscosity SV (DCA) of from 600 to 1000.

**8.** The film as claimed in one or more of claims 1 to 7, wherein the flame retardants used comprise organophosphorus compounds or mixtures of organophosphorus compounds and the UV stabilizers used comprise 2-hydroxybenzotriazoles or triazines or mixtures of these UV stabilizers.

**9.** The film as claimed in one or more of claims 1 to 8, wherein the UV stabilizer used comprises 2-(4,6-diphenyl-1,3,5-triazin-2-yl)-5-hexyloxyphenol or 2,2'-methylenebis-6-(2H-benzotriazol-2-yl)-4-(1,1,2,2-tetramethylpropyl)phenol or mixtures of these UV stabilizers with others.

**10.** The film as claimed in one or more of claims 1 to 9, wherein the concentration of the UV stabilizer(s) is from 0.01 to 5 % by weight, based on the weight of the layer of the crystallizable thermoplastic(s) in which the UV stabilizer is located.

**11.** The film as claimed in one or more of claims 1 to 10, wherein the flame retardant used is dimethyl methylphosphonate.

**12.** The film as claimed in one or more of claims 1 to 11, wherein the concentration of the flame retardants(s) is from 0.5 to 30 % by weight, preferably from 1 to 20 % by weight, based on the weight of the layer of the crystallizable thermoplastic(s) in which the flame retardant is located.

**13.** The film as claimed in one or more of claims 1 to 12, wherein the film comprises preferably from 0.1 to 1 % by weight of a hydrolysis stabilizer, based on the weight of the layer of the crystallizable thermoplastic(s) in which the hydrolysis stabilizer is located.

**14.** The film as claimed in one or more of claims 1 to 13, wherein the hydrolysis stabilizer used is pentaerythrityl tetrakis-3-(3,5-di-tert-butyl-4-hydroxyphenyl)propionate or 1,3,5-trimethyl-2,4,6-tris(3,5-di-tert-butyl-4-hydroxybenzyl)benzene.

**15.** The film as claimed in one or more of claims 1 to 14, wherein the film has two or more layers.

**16.** The film as claimed in claim 15, wherein the flame retardant and/or the UV stabilizer is/are only present in the outer layer(s).

**17.** The film as claimed in one or more of claims 1 to 16, wherein the film has a thickness of from 1 to 350 μm.

**18.** A process for producing a film as claimed in one or more of claims 1 to 17, which comprises melting, extruding, biaxially orienting and setting a crystallizable thermoplastic or a mixture made from crystallizable thermoplastics in an extruder, together with at least one flame retardant and at least one UV stabilizer and, if appropriate, with a hydrolysis stabilizer, the flame retardant, the UV stabilizer and, if appropriate, the hydrolysis stabilizer being added by way of masterbatch technology, the masterbatch, which contains the flame retardant and, if appropriate, the

hydrolysis stabilizer, being precrystallized or predried, said predrying comprising a gradual heating of the masterbatch under a pressure of from 20 to 80 mbar and stirring.

**19.** The use of a film as claimed in one or more of claims 1 to 17 for producing moldings.

**20.** A molding produced using a film as claimed in one or more of claims 1 to 17.

## Revendications

**1.** Feuille orientée transparente thermoformable, constituée d'un thermoplastique cristallisable ou d'un mélange de divers thermoplastiques cristallisables, qui présentent une teneur en diéthylèneglycol et/ou une teneur en polyéthylèneglycol ≥ 1 % en poids et/ou une teneur en acide isophtalique de 3 à 10 % en poids, comme constituant principal, et d'au moins un composé de phosphore organique soluble dans le thermoplastique comme agent ignifuge et d'au moins un stabilisateur UV choisi dans le groupe constitué des 2-hydroxy-benzotriazoles ou des triazines, le stabilisateur UV absorbant au moins 70 % de la lumière UV dans la plage de longueurs d'onde de 180 nm à 380 nm.

**2.** Feuille selon la revendication 1, **caractérisée en ce que** le thermoplastique présente une cristallinité dans la plage de 5 à 65 %.

**3.** Feuille selon la revendication 1 ou 2, **caractérisée en ce que** l'on utilise un polyester comme thermoplastique.

**4.** Feuille selon l'une quelconque ou plusieurs des revendications 1 à 3, **caractérisée en ce que** l'on utilise, comme thermoplastique, du poly(téréphtalate d'éthylène), du poly(téréphtalate de butylène) ou du poly(naphtalate d'éthylène).

**5.** Feuille selon l'une quelconque ou plusieurs des revendications 1 à 4, **caractérisée en ce que** l'on utilise du poly (téréphtalate d'éthylène) comme thermoplastique.

**6.** Feuille selon la revendication 5, **caractérisée en ce que** le poly(téréphtalate d'éthylène) présente une teneur en diéthylèneglycol et/ou une teneur en polyéthylèneglycol supérieure à 1,3 % en poids, de préférence, dans la plage de 1,6 à 5 % en poids.

**7.** Feuille selon la revendication 5 ou 6, **caractérisée en ce que** le poly(téréphtalate d'éthylène) présente une viscosité standard SV (DCE) de 600 à 1000.

**8.** Feuille selon l'une quelconque ou plusieurs des revendications 1 à 7, **caractérisée en ce que** l'on utilise, comme agents ignifuges, des composés de phosphore organiques ou des mélanges de composés de phosphore organiques et, comme stabilisateurs UV, des 2-hydroxybenzotriazoles ou des triazines ou des mélanges de ces stabilisateurs UV.

**9.** Feuille selon l'une quelconque ou plusieurs des revendications 1 à 8, **caractérisée en ce que** l'on utilise, comme stabilisateur UV, le 2-(4,6-diphényl-1,3,5-triazin-2-yl)-5-(hexyl)-oxyphénol ou le 2,2'-méthylène-bis-6-(2H-benzotriazol-2-yl)-4-(1,1,2,2-tétraméthylpropyl)-phénol ou des mélanges de ces stabilisateurs UV avec d'autres.

**10.** Feuille selon l'une quelconque ou plusieurs des revendications 1 à 9, **caractérisée en ce que** la concentration du ou des stabilisateurs UV est de 0,01 à 5 % en poids par rapport au poids de la couche du thermoplastique cristallisable ou des thermoplastiques cristallisables dans laquelle se trouve le stabilisateur UV.

**11.** Feuille selon l'une quelconque ou plusieurs des revendications 1 à 10, **caractérisée en ce que** l'on utilise du méthylphosphonate de diméthyle comme agent ignifuge.

**12.** Feuille selon l'une quelconque ou plusieurs des revendications 1 à 11, **caractérisée en ce que** la concentration de l'agent ignifuge ou des agents ignifuges est de 0,5 à 30 % en poids, de préférence, de 1 à 20 % en poids par rapport au poids de la couche du thermoplastique cristallisable ou des thermoplastiques cristallisables où se trouve l'agent ignifuge.

**13.** Feuille selon l'une quelconque ou plusieurs des revendications 1 à 12, **caractérisée en ce qu'**elle contient un stabilisateur contre l'hydrolyse, de préférence, en quantité de 0,1 à 1 % en poids par rapport au poids de la couche

du thermoplastique cristallisable ou des thermoplastiques cristallisables dans laquelle se trouve le stabilisateur contre l'hydrolyse.

**14.** Feuille selon l'une quelconque ou plusieurs des revendications 1 à 13, **caractérisée en ce que** l'on utilise, comme stabilisateur contre l'hydrolyse, le pentaérythrityl-tétrakis-3-(3,5-ditert-butyl-4-hydroxyphényl)-propionate ou le 1,3,5-triméthyl-2,4,6-tris(3,5-ditert-butyl-4-hydroxybenzyl)-benzène.

**15.** Feuille selon l'une quelconque ou plusieurs des revendications 1 à 14, **caractérisée en ce qu'**il s'agit d'une feuille multicouche.

**16.** Feuille selon la revendication 15, **caractérisée en ce que** l'agent ignifuge et/ou le stabilisateur UV ne sont contenus que dans la ou les couches de recouvrement.

**17.** Feuille selon l'une quelconque ou plusieurs des revendications 1 à 16, **caractérisée en ce qu'**elle présente une épaisseur de 1 à 350 μm.

**18.** Procédé de fabrication d'une feuille selon l'une quelconque ou plusieurs des revendications 1 à 17, **caractérisé en ce qu'**un thermoplastique cristallisable, ou un mélange de thermoplastiques cristallisables, est fondu dans une extrudeuse conjointement avec au moins un agent ignifuge et au moins un stabilisateur UV et, éventuellement, avec un stabilisateur contre l'hydrolyse, puis est extrudé, orienté biaxialement et fixé, dans lequel l'agent ignifuge, le stabilisateur UV et, éventuellement, le stabilisateur contre l'hydrolyse sont ajoutés selon le principe de la technologie du mélange-maître, le mélange-maître en question contenant l'agent ignifuge et, éventuellement, le stabilisateur contre l'hydrolyse, étant préalablement cristallisé ou séché, lequel séchage préalable consistant en un chauffage progressif du mélange-maître sous une pression de 20 à 80 mbars et sous agitation.

**19.** Utilisation d'une feuille selon l'une quelconque ou plusieurs des revendications 1 à 17, pour la fabrication de corps moulés.

**20.** Corps moulé fabriqué en utilisant une feuille selon l'une quelconque ou plusieurs des revendications 1 à 17.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0620245 A
- DE 2346787 A
- JP 04325551 A
- JP 58067411 A


### In der Beschreibung aufgeführte Nicht-Patentliteratur


- **H. Day ; D. M. Wiles.** *J. Appl. Polym. Sci,* 1972, vol. 16, 203